# EUROPEAN PATENT SPECIFICATION

(11) **EP 2 064 057 B1**
(45) Date of publication and mention of the grant of the patent: **01.03.2017**
(21) Application number: 07818339.9
(22) Date of filing: 21.09.2007
(51) Int. Cl.: B32B 27/32

(54) **MULTILAYER FILM**
MEHRSCHICHTFOLIE
FILM MOULTICOUCHE

(30) Priority: 22.09.2006 EP 06019881
(43) Date of publication of application: 03.06.2009
(73) Proprietor: Borealis Technology Oy, 06201 Porvoo (FI)
(72) Inventor: NILSEN, Jorunn, 3960 Stathelle (NO); DAVIKNES, Hans Georg, 3960 Stathelle (NO)
(74) Representative: Grünecker Patent- und Rechtsanwälte PartG mbB
(86) International application number: PCT/EP2007/008250
(87) International publication number: WO 2008/034630

(56) References cited:
- WO-A-01/10643
- WO-A-02/02323
- WO-A-99/51649
- WO-A-03/029000
- WO-A-2006/037603
- WO-A-2006/045550
- WO-A1-2006/091310

## Description

The present invention concerns a multilayer film comprising polyethylene polymers, as well as the use of such multilayer film for packaging purposes, in particular for packaging moisture sensitive materials.

### Description of the related art

Multilayer films are used in a broad variety of fields of application, including in particular also packaging applications. In particular, for moisture sensitive materials, the most common approach in the prior art is the use of a laminated multilayer structure, comprising at least one aluminum layer, laminated, for example, with at least one polyethylene layer. Such a multilayer structure generally provides sufficient moisture barrier properties required for packaging of moisture sensitive goods. The aluminum film layer provides very good moisture retention properties, determined, for example, as water vapor transmission rate (WVTR). However, such multilayer structures comprising an aluminum layer provide several serious drawbacks, such as high stiffness and low mechanical properties, so that problems during packaging operations occur. Multilayer structures comprising an aluminum film layer are, for example, easily damaged by sharp edges. Furthermore, such multilayer structures possess a low fold strength, so that further damages, such as cracks reducing the moisture protection properties, can be easily generated during the handling of the multilayer structure comprising an aluminum film layer.

WO 2006/045550 discloses a polyethylene composition which provides desirable mechanical properties such as high charpy impact strength or tensile strain at break as well as desired processibility. WO 99/51649 discloses a high-density polyethylene composition enabling the preparation of polymer films with good impact and mechanical properties as well as processibility. WO 2006/037603 discloses a multilayer film providing good optical and mechanical properties, so that good quality containers can be prepared. WO 02/02323 discloses a heat sealable polyethylene film having good sealing ability. WO 01/10643 discloses a heat shrinkable film comprising as core layer a layer including a multicomponent interpenetrating network resin. WO 03/029000 discloses a sealant film, which is to be laminated to a polymer film and a barrier film, such an aluminum foil, in order to provide a packaging material.

Attempts accordingly have been made in order to replace multilayer structures as discussed above with film structures comprising no aluminum film layer. EP 1283224 A1, for example, discloses films made from high-density polyethylene (HDPE) polymer. EP 0374783 A2 discloses heat shrinkable films, comprising, for example, a polyvinyl chloride (PVC) core layer.

EP 1275664 A1 finally discloses films made from HDPE polymer, typically comprising an outer layer made of HDPE.

However, the films as disclosed in the prior art still do not provide a sufficient balance of moisture protection and mechanical properties required for certain end applications, so that there exists a need for novel and improved film structures, providing films enabling a good protection in particular of moisture sensitive products, together with sufficient mechanical properties, so that in particular the drawbacks associated with multilayer structures comprising an aluminum film layer are overcome.

WO 2006/091310 A1 discloses multilayer polyethylene films.

### Brief description of the present invention

The present invention solves the above object by providing a three-layer structure as defined in claim 1. Preferred embodiments are defined in claims 2 to 17. The present invention furthermore provides a packaging material as defined in claims 18 and 19 as well as the use of the three-layer structure for producing packaging materials and for packaging moisture sensitive goods as defined in claims 20 to 23. Further preferred embodiments of all aspects of the present invention are disclosed in the following specification.

### Brief description of the figure

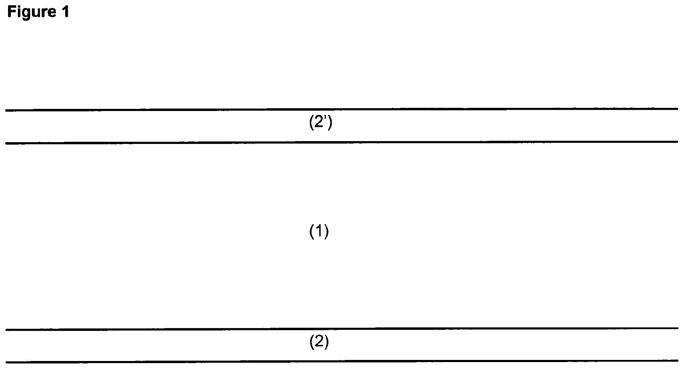

Figure 1 schematically shows the three-layer structure in accordance with the present invention.

### Detailed description of the present invention

The three-layer structure as defined in claim 1 comprises a core layer (1) and two layers sandwiching the core layer (2, 2'), wherein the core layer comprises HDPE polymer and the two sandwiching layers comprise linear low density (LLDPE) polymer, characterized in that the core layer comprises more than 50-wt% of HDPE, preferably more than 85-wt% of HDPE based on the total weight of the core layer, and wherein both of the sandwiching layers (2, 2') consist of LLDPE polymer, wherein conventional additives such as stabilizers, processing aids, colorants, anti-blocking agents, and/or slip agent, may be added, wherein the overall amount of additives in the layer is 2 wt% or less, based on the weight of the layer.

The purely polyethylene based three-layer structure of the invention provides, already as such, surprisingly good moisture barrier properties expressed e.g. as WVTR. Due to superior moisture barrier properties said structure can be used i.e. in film applications, wherein the known Al-layer containing structures have conventionally been used.

This structure, and in particular also the preferred embodiments thereof as disclosed herein, further provide a structure possessing a fully satisfactory balance of mechanical properties and moisture protection properties. Accordingly, the three-layer structure in accordance with the present invention is in particular suitable for the manufacture of packaging material and for use in packaging moisture sensitive goods.

### Core layer

As defined in claim 1, the core layer of the three-layer structure in accordance with the present invention comprises HDPE polymer as major component and in preferred embodiments of the present invention the core layer consists of HDPE polymer. The core layer of the three-layer structure, in accordance with the present invention according to the preferred embodiment, consisting of HDPE polymer, may comprise one single HDPE polymer component or a mixture of said HDPE polymer component with one or more other HDPE polymer components. Mainly due to economic reasons embodiments wherein the core layer consists of one HDPE polymer or a mixture of two different HDPE polymers is preferred. When the core layer consists of a mixture of two HDPE polymers, same may be present in any desired weight ratio, typically these two HDPE polymers are then present in a weight ratio of from 30:70 to 70:30, more preferably from 60:40 to 40:60.

HDPE polymers to be employed in accordance with the present invention are polyethylenes having a density of at least 940 kg/m³, preferably at least 945 kg/m³, more preferably in the range of from 950 to 980 kg/m³, such as from 950 to 965 kg/m³. In particular, it is preferred when the density of the HDPE polymer to be employed in accordance with the present invention is at least 955 kg/m³.

An HDPE polymer to be employed in accordance with the present invention designates a polyethylene which may be either a homopolymer or a copolymer comprising a minor amount of repeating units derived from one or more α-olefins having from 3 to 20 carbon atoms, preferably from 3 to 10 and more preferably from 3 to 6 carbon atoms. The comonomer content of a copolymer may typically be from 0.25-mol% to 10-mol%, more preferably 0.5-mol% to 5-mol%, and more preferably the upper limit for the comonomer content is 2.5-mol%. In accordance with the present invention both homopolymers and copolymers of polyethylene are equally preferred.

The HDPE polymer to be employed in accordance with the present invention may be unimodal with respect to properties such as molecular weight distribution and/or comonomer content or the HDPE polymer to be employed in accordance with the present invention may be multimodal, in particular bimodal, with respect to properties such as molecular weight distribution and/or comonomer content.

A preferred embodiment in accordance with the present invention is a multimodal HDPE polymer, comprising at least a lower molecular weight component (LMW) and a higher molecular weight component (HMW). These components may be present in any desired ratios, with typical split, i.e. weight ratios between the LMW component and the HMW component being from 10:90 to 90:10, preferably 40:60 to 60:40. The LMW and/or HMW component can be a homo- or copolymer, preferably at least one of the LMW and HMW components is a homopolymer. More preferably, the LMW component is a homopolymer and the HMW component is homo- or copolymer, typically a copolymer.

In accordance with preferred embodiments of the present invention, the core layer either consists of a unimodal HDPE polymer (with respect to the molecular weight distribution) or of a multimodal, preferably bimodal HDPE polymer (with respect to the molecular weight distribution).

The melt flow rate (MFR) of the HDPE polymer to be employed for the core layer in accordance with the present invention is not critical and can be varied depending on the mechanical properties desired for an end application. In one preferable embodiment MFR₂ value in the range of from 0.05 to 10 g/10 min, preferably 0.1 to 2 g/10 min and more preferably from 0.3 to 0.8 g/10 min are desired. In another preferable embodiment MFR₂₁ value in the range of from 2 to 12 g/10 min, preferably 4 to 10 g/10 min, more preferably 6 to 8 g/10 min are desired.

The HDPE polymer to be employed in accordance with the present invention may be a known and e.g. commercially available, polyethylene polymer or said HDPE polymer may be prepared using any coordination catalyst, typically ZN catalysts, Cr-catalyst as well as single site catalysts (SSC). The molecular weight distribution (MWD) expressed as Mw/Mn of the HDPE polymer to be employed in accordance with the present invention is not critical and can vary depending, again, on the mechanical properties desired for the end application. MWD is preferably in the range of from 2 to 35, wherein preferred ranges for, unimodal HDPE polymer are from 2 to 20, preferably 3 to 10, in particular 4 to 7 and more preferably 4.5 to 6.0, while preferred ranges for multimodal, preferably bimodal HDPE polymer are from 10 to 35, preferably 12 to 20, whereas in some embodiments, as broad as 15 to 35 may be desired.

HDPE polymer to be employed in accordance with the present invention may be produced using polymerization reactions which are, in principle, known in the art and available to the skilled person.

Typical SSC catalysts are metallocenes and non-metallocenes, such as disclosed in EP 129368 A, WO 98/56831, WO 00/34341, EP 260130 A, WO 97/28170, WO 98/46616, WO 98/49208, WO 99/12981, WO 99/19335, WO 98/56831, WO 00/34341, EP 423101 A and EP 537130. Typical ZN catalysts are, for example, disclosed in WO 95/35323, WO 01/55230, EP 810235 A and WO 99/51646. The above references for the catalyst are examples of typical useful catalysts, naturally other type of SSC or ZN catalysts, may be employed as well.

The HDPE polymers to be employed in accordance with the present invention may be produced in principle using any polymerization method, including solution, slurry and gas phase polymerization. The temperature in the polymerization reactor needs to be sufficiently high to reach an acceptable activity of the catalysts, while not exceeding the softening temperature of the polymer, in order to avoid processing problems. Typical polymerization temperatures may therefore be in the range of from 50 to 110°C, preferably 75 to 105°C and more preferably 75 to 100°C. Reactor pressures can be selected over a broad range depending on the type of polymerization and, in principle, are known to the skilled person. Suitable pressure ranges for slurry polymerizations are, for example, 10 to 100 bar, preferably 30 to 80 bar.

A multimodal HDPE polymer to be employed in accordance with the present invention may, in particular, be a so-called in-situ blend produced during the polymerization process of said multimodal HDPE. Such in-situ multimodal HDPPE can be prepared using two or more polymerization stages or by using two or more different catalysts and/or different polymerization conditions in a one-stage polymerization. Preferably, multimodal HDPE polymers, in particular the above discussed bimodal embodiments, are prepared in a two-step polymerization comprising a slurry polymerization, for example in a loop reactor, followed by a gas phase polymerization in a gas reactor. A preferred loop reactor-gas phase reactor system in this respect is generally known as Borstar^{®} reactor system.

The polymerization conditions in the slurry polymerization will be typically as outlined above, with residence times in the range of from 0.3 to 5 hours, such as 0.5 to 2 hours. A suitable diluent may be employed, such an aliphatic hydrocarbon having a boiling point in the range from -70 to 100°C, such as propane or isobutane. In the gas phase polymerization, the temperature will preferably in the range of from 50 to 130°C, more preferably from 60 to 115°C, with pressures being in the range of from 10 to 60 bar, 10 to 40 bar, with residence time of from 1 to 8 hours. Hydrogen may be added to any of the polymerization stages in order to control the molar mass in a manner known to the skilled person.

The properties of the polymer composition can be adjusted or controlled in a known manner e.g. with one or more of the following process parameters: hydrogen feed, comonomer feed, monomer feed, catalyst feed and, in case of a multimodal HDPE polymer, split, i.e. weight ratio, between the polyethylene components present in said multimodal HDPE. As well known, the adjustment of said MFR value to a desired level may be effected during the polymerisation process by adjusting and controlling the process conditions, e.g. by regulating the molecular weight of the polymerisation product using a molecular weight regulator, e.g. hydrogen.

In embodiments, the core layer comprises HDPE as only polymeric component although conventional additives, such as those exemplified later, can be present. Preferably, the core layer consists of HDPE, with or without the conventional additives mentioned later. It is in any case preferred that the core layer does not comprise any non-polyethylene polymers, such as polypropylenes, polystyrenes, condensation polymers as well as ethylene copolymers with comonomers comprising heteroatoms, such as vinyl acetate etc.

### Sandwiching layers

As identified above, the three-layer structure in accordance with the present invention comprises in addition to the core layer two layers sandwiching the core layer. The layers sandwiching the core layer are layers directly contacting the core layer, preferably without any adhesive layer or surface treatment applied.

The two sandwiching layers consist of a LLDPE polymer, which may be identical in both layers or which may be different in the two layers. The sandwiching layers may consist of one LLDPE polymer only or may consist of a mixture of two or more LLDPE polymers.

In accordance with the present invention, it is preferred when the sandwiching layers consist of a mixture of two different LLDPE polymers, which typically are present in a weight ratio of from 80:20 to 20:80, more preferably from 70:30 to 30:70. For such mixed LLDPE sandwiching layers, it is furthermore preferred when the LLDPE polymers differ at least with respect to one property, such as type of a catalyst used for preparing the LLDPE polymer (SSC/ZN), molecular weight distribution (unimodal/multimodal), or comonomer content
(unimodal/multimodal) etc. One particular preferred embodiment in accordance with the present invention employs a mixture of two LLDPE polymers for the sandwiching layers, wherein one of the LLDPE polymer is prepared using a single site catalyst (referred as mLLDPE) while the other one is a LLDPE polymer prepared using a ZN catalyst (referred as znLLDPE). Further preferred in this connection is an embodiment wherein at least one of the two LLDPE polymers has a multimodal, preferably bimodal, molecular weight distribution. In a still further embodiment of such a mixture, the other LLDPE shows a unimodal molecular weight distribution, whereas the first one displays a bimodal molecular weight distribution. Preferably the unimodal LLDPE polymer is mLLDPE and the bimodal LLDPE is znLLDPE.

The term "LLDPE polymer" as employed in the present invention defines a polyethylene copolymer having a density of less than 940 kg/m³ such as from less 940 kg/m³ to 905 kg/m³. Depending on the desired end application, in some embodiments preferred range is between 940 kg/m³ to 930 kg/m³, and in some other embodiments lower LLDPE densities are preferred, such as range of from 935 to 915 kg/m³, preferably from 935 to 918 kglm³ or from 935 to 920 kg/m³. The LLDPE polymer is a polyethylene polymer comprising repeating units derived from ethylene together with a minor proportion of repeating units derived from at least one α-olefin having from 3 to 12 carbon atoms, such as butene, hexene or octene. The comonomer content may be in the range of from 2 to 10-mol%, preferably 4 to 8-mol%. In particular, preferred is a LLDPE polymer being an ethylene hexene copolymer, an ethylene octene copolymer or an ethylene butene copolymer.

Preferably the LLDPE components to be employed in accordance with the present invention show MFR₂ values of from 0.01 to 10 g/10 min, preferably 0.01 to 5g/10min, even more preferably 0.05 or 0.1 to 5 g/10 min, more preferably 0.5 to 2 g/10 min and most preferably 0.5 to 1.5 g/10 min. If a blend of a znLLDPE polymer and an mLLDPE component is employed, it is preferred when the MFR₂ value of the znLLDPE is lower than the MFR₂ value of the mLLDPE component. Preferred MFR₂ values for mLLDPE components are as given above and, in particular, from 0.5 to 1.5 g/10 min, whereas preferred MFR₂ values for znLLDPE components are again as mentioned above, and preferably from 0.2 to 0.8 g/10 min.

The LLDPE polymer to be employed in accordance with the present invention may be known and may e.g. be a commercially available polyethylene copolymer or said LLDPE polymer may either be a polyethylene polymer prepared using a coordination catalyst, typically a ZN catalyst or a single site catalyst (SSC), which SSC preferably is a metallocene catalyst (in the following designated mLLDPE). The present invention, however, also contemplates the use of any mixture of znLLDPE polymer and mLLDPE polymers as discussed above.

Also the LLDPE polymer to be employed in accordance with the present invention may be unimodal, for example with respect to the molecular weight distribution and/or the comonomer content, or multimodal, in particular bimodal, with respect to molecular weight distribution and/or comonomer content

In accordance with a particular preferred embodiment of the present invention, the sandwiching layers consist of a mixture of different LLDPE polymers. Preferred mixtures are mixtures of a znLLDPE polymer with an mLLDPE polymer, in various ratios. Preferably, however, the znLLDPE polymer makes up the major portion of the sandwiching layers, such as from 60 to 90%, in particular 65 to 75%. A particular preferred mixture consists of a multimodal, preferably bimodal, znLLDPE polymer (with respect to the molecular weight) in admixture with a multimodal or unimodal, preferably unimodal mLLDPE polymer (with respect to molecular weight distribution), for example in a mixture comprising 70% of the bimodal znLLDPE polymer and 30% of the unimodal mLLDPE polymer.

A particularly preferred embodiment of the present invention is given when the sandwiching layers comprise znLLDPE as major component, blended with (if a blend component is present) a mLLDPE. The blend ratios may be as defined above, but preferred embodiments in this respect amounts of from 70 to 100% of znLLDPE and from 0 to 30% of the mLLDPE component (i.e. blend ratios (weight) of 70/30 to 100/0 zn/m). In this respect, the two sandwiching layers (2 and 2') may consist of the same composition, as already outlined above, or the two sandwiching layers (2 and 2') may consist of differing compositions, each composition, however, being as defined in the present paragraph.

As described above for the HDPE polymer, also in case of a multimodal LLDPE, independently of the catalyst used for the preparation thereof, the multimodal LLDPE polymer comprises at least a lower molecular weight component (LMW) and a higher molecular weight component (HMW). These components may be present in any desired ratios, with typical split, i.e. weight ratios between the LMW component and the HMW component being from 10:90 to 90:10, preferably 40:60 to 60:40. For LLDPE polymer at least one of the LMW and/or HMW components is a copolymer the other being a homo- or copolymer. Typically, the LMW component is homo- or copolymer and the HMW component a copolymer.

As already outlined above in connection with the core layer, it is preferred in accordance with the present invention when the sandwiching layers only consist of LLDPE components as polymeric components, although conventional additives, such as those mentioned below, can be present. The sandwiching layers comprise neither any copolymers of ethylene with heteroatom containing comonomers, such as vinyl acetate, nor polymers, such as propylene butene copolymers, ethylene propylene butene terpolymers or polybutene-1. The sandwiching layers do not comprise any LDPE, i.e. the sandwiching layers consist of LLDPE, wherein the conventional additives as mentioned below may be present or absent.

The LLDPE polymers to be employed in accordance with the present invention may be prepared by polymerization processes which are, in principle, known to the skilled person. In this respect, reference can also be made to the above process description with respect to the HDPE polymer. In particular, the multimodal, preferably bimodal, LLDPE polymer to be employed in accordance with the present invention may also be prepared using the above-outlined Borstar^{®} reactor configuration.

Suitable catalysts for preparing LLDPE polymer to be employed in accordance with the present invention are known to the skilled person, reference in this respect can be made to the documents cited above in connection with the preparation of the HDPE polymer for the core layer. Polymerization conditions are likewise known to the average skilled person and suitable conditions for slurry reactors comprise reaction temperatures in the range of from 60 to 110°C, reactor pressures in the range of from 5 to 80 bar with residence times of 0.3 to
5 hours, using typically a diluent selected from an aliphatic hydrocarbon having a boiling point in the range of -70 to 100°C. Super critical conditions may be employed if desired and slurry polymerization furthermore may also be carried out in bulk, where the reaction medium is formed from the monomer being polymerized. For gas phase reactors reaction temperatures will generally be in the range of 60 to 115°C, with reactor pressures in the range from 10 to 25 bars using residence times of from 1 to 8 hours. The fluid gas medium typically employed will commonly be a non-reactive gas, such as nitrogen or a low boiling point hydrocarbon, such as propane, together with the monomers to be polymerized.

The properties of the polymer composition can be adjusted or controlled in a known manner e.g. with one or more of the following process parameters: hydrogen feed, comonomer feed, monomer feed, catalyst feed and, in case of multimodal LLDPE polymer, split, i.e. weight ratio, between the polyethylene components present in said multimodal LLDPE. As well known, the adjustment of said MFR value to a desired level may be effected during the polymerisation process by adjusting and controlling the process conditions, e.g. by regulating the molecular weight of the polymerisation product using a molecular weight regulator, e.g. hydrogen.

### Three-layer structure

With respect to the three-layer structure in accordance with the present invention, it is furthermore preferred when the core layer amounts to more than 50 % of the total thickness of the three-layer structure, preferably more than 60 %, and in particular 70 % or more. The two sandwiching layers preferably amount to equal parts of the remaining thickness, so that preferred sandwiching layers each amount to about 25 % or less of the total thickness of the three-layer structure, preferably 20 % or less and in particular 15 % or less.

The overall absolute thickness of the three-layer structure in accordance with the present invention may be selected depending on the desired properties mainly determined by the end-use application, but typical thicknesses for the layer structure in accordance with the present invention are in the range of from 50 µm to 1000 µm, more preferably from 100 µm to 500 µm and in particular in the range of from 150 µm to 300 µm, preferably 180 to 250 um, more preferably still 180 to 240 µm and in embodiments 200 to 240 µm, such as about 200 µm.

Preferred combinations of polymers for the core and the sandwiching layers are:
(1) core layer comprising a unimodal HDPE polymer and the sandwiching layers comprising a multimodal LLDPE polymer, more preferably a mixture of multimodal LLDPE polymer together with a unimodal or multimodal LLDPE polymer. Multimodal LLDPE is preferably bimodal LLDPE polymer;
(2) core layer comprising a multimodal, preferably bimodal, HDPE polymer and the sandwiching layers comprising a mixture of a multimodal LLDPE polymer and a multimodal or unimodal LLDPE polymer;
wherein the modality refers to the molecular weight distribution.

Moreover, in the three-layer structure of the invention the unimodal and the bimodal HDPE polymers are preferably produced using a ZN catalyst. Also preferably, the multimodal, preferably bimodal, LLDPE polymer is produced using a ZN catalyst. The unimodal LLDPE is preferably mLLDPE polymer.

The three-layer structure as identified in the present invention surprisingly displays an improved balance of moisture protection properties and mechanical properties.

The present three-layer film structure of the invention which has a total thickness of 50 to 1000 µm, and wherein the core layer of said three-layer structure amounts to more than 50%, preferably more than 60 %, more preferably more than 70%, of the total thickness of the three-layer structure, has excellent moisture barrier properties, namely provides a water vapor transmission rate (WVTR) of 1.0 g H₂O/m² /24h or less, when measured from a blown film consisting of said three-layer structure according to the method described in the general experimental part under "Film Sample Preparation". More preferably said three-layer film structure of the invention having a total thickness of 100 to 500 µm, more preferably of 150 to 300 µm, and wherein said core layer amounts to more than 50%, preferably more than 60%, more preferably more than 70%, of the total thickness of the three-layer structure, provides a WVTR of 1.0 g H₂O/m² /24h or less, preferably of 0.8 g H₂O/m²/24h or less, more preferably of 0.75 g H₂O/m²/24h or less and, in embodiments, of 0.65 g H₂O/m²/24h or less, or even less, such as of 0.6 g H₂O/m²/24 h or less, when measured from a blown film consisting of said three-layer structure according to the method described in the general experimental part under "Film Sample Preparation". Even more preferably said three-layer film structure of the invention having a total thickness of 180 to 250 µm, preferably 180 to 240 µm, more preferably 200 to 240 µm and wherein the core layer of said three-layer structure amounts to more than 50%, preferably more than 60%, more preferably more than 70% of the total thickness of the three-layer structure, provides a WVTR of 1.0 g H₂O/m²/24h or less, preferably of 0.8 g H₂O/m²/24h or less, more preferably of 0.75 g H₂O/m²/24h or less and, in embodiments, of 0.65 g H₂O/m²/24h or less, or even less, such as of 0.6 g H₂O/m²/24 h or less, when measured from a blown film consisting of said three-layer structure according to the method described in the general experimental part under "Film Sample Preparation".

Accordingly, the present invention provides a three-layer structure having a fully satisfactory moisture protection property as determined by the values for the water vapor transmission rate. In this aspect of the present invention, the three-layer structure can be defined as a three-layer structure providing a water vapor transmission rate of 1.0 g H₂O/m² /24h or less, preferably 0.8 g H₂O/m²/24h or less, more preferably 0.75 g H₂O/m²/24h or less and, in embodiments, 0.65 g H₂O/m²/24h or less or even less such as 0.6 g H₂O/m²/24 h or less, are desired, when said WTR is determined with a three-layer structure having a total thickness of 200 µm, with the layer thickness distribution between outer/core/inner -layers being 15%, 70 %, and, respectively, 15% of the total thickness of the three-layer structure (i.e. a layer thickness distribution of 15/70/15 which expression is used below). More specifically, the above given WVTR values and ranges were measured using a three-layer film sample with an overall thickness of 200 µm made according to the method described in the general experimental part under "Film Sample Preparation" (using by coextrusion on a three-layer Windmöller & Hölscher coextrusion line with die diameter 200 mm, at a blow up ratio (BUR) 3.5:1, frost line height 600 mm, Die gap 1.2 mm, Extruder temp setting: 210°C and line speed of 5.6 m/min to form a 200 µm 3-layered film with a layer thickness distribution of 15:70:15).

It is to be noted that, unless otherwise stated herein, also the other film properties defined for the three-layer structure of the invention were measured using a three-layer film sample prepared as described in the previous paragraph (and under "Film Sample Preparation").

The three-layer structure in accordance with the present invention furthermore provides for the satisfactory mechanical properties, in particular for the satisfactory values for at least one of the following properties: impact resistance determined by dart drop on film sample (impact resistance on film) and on the fold of a folded film (impact resistance on fold), tensile modulus, tear resistance on machine direction (MD) and puncture resistance, each determined as defined below.

In preferred embodiments, the three-layer structure in accordance with the present invention provide values for impact resistance on fold of 400 g or more, preferably 450 g or more; values for impact resistance on film of 500 g or more, preferably 550 g or more; when determined in machine direction (MD) from a three-layer film sample as described and prepared in the experimental part under "Film Sample Preparation".

Tensile Modulus of the three-layer structure of the invention is typically of 300 MPa or more, preferably of 350 MPa or more when determined from a three-layer film sample as described and prepared in the experimental part under "Film Sample Preparation".

Values for tear resistance in machine direction (MD) may be 5 N or more, when determined from a three-layer film sample as described and prepared in the experimental part under "Film Sample Preparation".

Values for puncture resistance (energy to break) preferably amount to 10 J or more, preferably 20 J or more. Each of these values again refers to the 200 µm thick three-layer structure embodiment as exemplified above in connection with the water vapor transmission rate (as described and prepared in the experimental part under "Film Sample Preparation").

Due to these novel and unique properties of the three-layer structure in accordance with the present invention, these structures are in particular suitable for preparing packaging materials, such as sacks and bags, which are in particular suitable for packaging moisture sensitive goods, including moisture sensitive polymeric products, food, medicinal products and medicaments etc.

For such packaging purposes, the three-layer structure in accordance with the present invention may be laminated with additional films, including resin films, metal foils etc., depending upon the desired end application. However, the three-layer structure in accordance with the present invention preferably is employed as such, without lamination to any further film material, i.e. In a preferred embodiment the three-layer structure consists of the three layers identified and discussed above.

As identified above, the three-layer structure in accordance with the present invention is preferably without lamination to further film materials and, particularly, the three-layer structure in accordance with the present invention is not laminated to aluminum foils, metallized films, silicon oxide deposited films, vinylidene chloride resins or a saponified product of ethylene vinyl acetate copolymer, nor to polyester resin layers, polyamide resin layers and polycarbonate resin layers. In this respect, the advantage of the present invention in particular is given due to the improved water vapor transmission property of the three-layer structure in accordance with the present invention, namely that very low water vapor transmission rates can be obtained even without the use of conventional barrier layers, such as aluminum foils and metallized layers and the other resin layers mentioned above.

It is evident for the skilled person the lamination techniques are different from (co)-extrusion techniques, so that also a laminated film is different from a (co)-extruded film (including blown-films).

The three-layer structure in accordance with the present invention may be prepared by any conventional film extrusion procedure known in the art including cast film and blown film extrusion. Preferably, the three-layer film is formed by blown film extrusion, more preferably by coextrusion processes, which in principle are known and available to the skilled person.

Typical processes for preparing a three-layer structure in accordance with the present invention are extrusion processes through an angular dye, followed by blowing into a tubular film by forming a bubble which is collapsed between the rollers after solidification. This film can then be slid, cut or converted, such as by using a gazette head, as desired. Conventional film production techniques may be used in this regard. Typically the core layer mixture and the mixture for the sandwiching layers are coextruded at a temperature in the range of from 160 to 240°C and cooled by blowing gas (generally air) at a temperature of 10 to 50°C, to provide a frost line height of 1 or 2 to 8 times the diameter of the dye. The blow up ratio should generally be in the range of from 1.5 to 4, such as from 2 to 4, preferably 2.5 to 3.

If desired any of the three layers of the three-layered structure of the invention may comprise usual additives, such as stabilizers, processing aids, colorants, anti-block agents, slip agents etc. in amounts not detrimental to the desired function of the three-layered structure. The overall amount of additives in a layer is 2 wt.-% or less, based on the weight of the layer, preferably 1 wt.-% or less, more preferably 0.5 wt.-% or less and in particular 0.1 wt.-% or less. In embodiments the layers are completely free of any additives.

### Definitions and Determination methods

The following methods were used to measure the properties that are defined generally above and in examples below. Unless otherwise stated, the film samples used for the measurements and definitions were prepared as described under the heading "Film Sample Preparation".

**Multimodality with respect to molecular weight distribution:** Usually, a polyethylene polymer comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions the polymer is consisting of. Thus, for example, a composition consisting of two fractions only is called "bimodal".

The form of the molecular weight distribution curve, typically obtained by GPC, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

**Impact resistance on film** is determined by Dart-drop (g/50%). Dart-drop is measured using ISO 7765-1, method "A". A dart with a 38 mm diameter hemispherical head is dropped from a height of 0.66 m onto a film clamped over a hole. If the specimen fails, the weight of the dart is reduced and if it does not fail the weight is increased. At least 20 specimens are tested. The weight resulting in failure of 50% of the specimens is calculated. The same method was used for measuring the **Impact resistance on fold,** but using the film sample according to said impact resistance test which is folded once and the dart hitting the fold.

**Puncture resistance** (determined in Ball puncture (energy/J) at +23°C. The method is according to ASTM D 5748. Puncture properties (resistance, energy to break, penetration distance) are determined by the resistance of film to the penetration of a probe (19 mm diameter) at a given speed (250mm/min).

**Tear resistance (determined as Elmendorf tear (N)).** The tear strength is measured using the ISO 6383/2 method. The force required to propagate tearing across a film specimen is measured using a pendulum device. The pendulum swings under gravity through an arc, tearing the specimen from pre-cut slit. The specimen is fixed on one side by the pendulum and on the other side by a stationary clamp. The tear strength is the force required to tear the specimen.

**WVTR** (Water Vapor Transmission Rate): was measured according to ASTM F 1249 at 38°C and 90 % relative humidity on a Permantran-W (MoCoN Instruments, Minnesota).

**Comonomer content** of a polymer was determined by ¹³C NMR.
**MFR₂**: ISO1133 at 190°C at a load of 2.16 kg
**MFR₅**: ISO1133 at 190°C at a load of 5 kg
**MFR₂₁**: ISO1133 at 190°C at a load of 21.6 kg

**Density** of the materials is measured according to ISO 1183:1987 (E), method D, with isopropanol-water as gradient liquid. The cooling rate of the plaques when crystallizing the samples was 15 C/min. Conditioning time was 16 hours.

### Molecular weights, molecular weight distribution, Mn, Mw, MWD

Mw/Mn/MWD are measured by GPC according to the following method:
The weight average molecular weight Mw and the molecular weight distribution (MWD = Mw/Mn wherein Mn is the number average molecular weight and Mw is the weight average molecular weight) are measured by a method based on ISO 16014-4:2003. A Waters 150CV plus instrument was used with 3 x HT&E styragel column from Waters (divinylbenzene) and trichlorobenzene (TCB) as solvent at 140 °C. The column set was calibrated using universal calibration with narrow MWD PS standards (the Mark Howinks constant K: 9.54*10-5 and a: 0.725 for PS, and K: 3.92*10-4 and a: 0.725 for PE). Equipment: Alliance 2000 GPCV (W4410), detector: Refractive index and Visc-detector.

**Tensile modulus** (secant modulus, 0.05-1.05%) is measured according to ASTM D 882-A on film samples prepared as described under the Film Sample preparation and in tables with film thickness as given for each test in below Tables 1 and 2. The speed of testing is 5mm/min. The test temperature is 23°C. Width of the film was 25 mm.

The following examples illustrate the present invention.

### Examples

### Preparation of Polymer components employed in the invention:

**mLLDPE 1 and mLLDPE 2:** Both are ethylene hexene copolymers and mLLDPE 1 and 2 were produced using a bis(n-butylcyclopentadienyl) hafnium dibenzyl catalyst in a slurry loop reactor at the polymerization conditions given below. For the preparation of the catalyst system, reference is made to WO2005/002744, preparation example 2.

### mLLDPE 1:

Pressure 42 bar;
C2 amount in flash gas: 5-wt%;
C6/C2 in flash gas: 67 mol/kmol;
Temp. 90°C;
Residence time: 40 to 60 mins

The resulting unimodal mLLDPE polymer has a MFR₂ of 1.3 g/10min and a density of 934 kg/m³.

### mLLDPE 2:

Pressure 42 bar
C2 amount in flash gas: 5-wt%
C6/C2 in flash gas: 130 mol/kmol
Temp. 86°C
Residence time: 40 to 60 mins

The resulting polymer has a MFR₂ of 1.3 g/10min and a density of 922 kg/m³.

### znLLDPE 1:

A multimodal znLLDPE 1 polymer was prepared in a pilot scale multistage reactor system containing a loop reactor and a gas phase reactor. A prepolymerization step preceded the actual polymerisation step. The prepolymerization stage was carried out in slurry in a 50 dm³ loop reactor at about 80°C in a pressure of about 65 bar using the polymerisation catalyst prepared analogously to Example 3 of EP 688794 using silica support having average particle size of 25 µm and triethylaluminium as the cocatalyst. The molar ratio of aluminum of the cocatalyst to titanium of the catalyst was about 20. Ethylene was fed in a ratio of (200g of C2)/(1g/catalyst). Propane was used as the diluent and hydrogen was feeded in amount to adjust the MFR2 of the prepolymer to about 10 g/10 min.
The obtained slurry together with prepolymerized catalyst and triethyl aluminum cocatalyst were introduced into a 500 dm³ loop reactor, wherein also a continuous feeds of propane, ethylene and hydrogen were introduced. The feed ratio of H2/C2 was 395 mol/kmol .The loop reactor was operated at 95 °C temperature and 60 bar. The process conditions were adjusted to form polymer having an MFR₂ of 400 g/10 min and a density of about 970 kg/m³.

The obtained slurry was then transferred to a fluidized bed gas phase reactor, where also additional ethylene, 1-butene comonomer and hydrogen were added, together with nitrogen as an inert gas to produce the HMW component in the presence of the LMW component. The gas phase reactor was operated at a temperature of 80 °C and a pressure of 20 bar and the feed ratio of H2/C2 and the feed ratio of C4/C2 were adjusted to produce prepolymerized final bimodal polymer which, after collecting the polymer, blending with additives and extruding into pellets in a counterrotating twin-screw extruder JSW CIM90P, resulted to a polymer having an MFR₂ of 0.4 g/10 min and density of 937 kg/m³. The split between the polymer produced in the loop reactor and the polymer produced in the gas phase reactor was 43/57.

**znLLDPE 2:** A multimodal znLLDPE 2 was produced analogously to the polymerization process of znLLDPE 1 by adjusting the feed ratio of H2/C2 and the feed ratio of C4/C2 to produce prepolymerized final bimodal polymer which, after collecting the polymer, blending with additives and extruding into pellets in a counterrotating twin-screw extruder JSW CIM90P, resulted to a polymer having an MFR₂₁ of 20 g/10 min and density of 931 kg/m³. The split between the polymer produced in the loop reactor and the polymer produced in the gas phase reactor was 41/59.

**HDPE 1:** The bimodal HDPE 1 polymer was synthesized in a pilot scale multistage reactor system containing a loop reactor and a gas phase reactor using the polymerisation catalyst prepared analogously to Example 3 of EP 688794 (the average particle size of the silica support was 25 µm) and triethylaluminium as the cocatalyst. The molar ratio of aluminum of the cocatalyst to titanium of the catalyst was about 15. Into a loop reactor having a volume of 500 dm³ were continuously introduced propane (as a diluent), ethylene and hydrogen. The ratio of hydrogen to ethylene was 372 mol/kmol. The loop reactor was operated at 95 °C temperature and 60 bar pressure. The production rate of polymer was about 27 kg/h. The polymer produced in the loop reactor had an MFR₂ of 410 g/10 min and a density of about 970 kg/m³.

The slurry was withdrawn from the loop reactor sequentially through outlet valve and directed to a flash where the pressure was reduced to 3 bar. The polymer containing a minor amount of residual hydrocarbons was directed to a fluidized bed gas phase reactor, where also additional ethylene, 1-butene comonomer and hydrogen were added, together with nitrogen as an inert gas to produced the HMW component in the presence of the LMW component. The gas phase reactor was operated at a temperature of 85 °C and a pressure of 20 bar. The hydrogen to ethylene ratio and the ratio of 1-butene to ethylene were adjusted to produce final bimodal polymer which, after collecting the polymer, blending with additives and extruding into pellets in a counterrotating twin-screw extruder JSW CIM90P, resulted to a HDPE polymer having an MFR₂₁ of 7 g/10 min and density of 955 kg/m³. The split between the polymer produced in the loop reactor and the polymer produced in the gas phase reactor was 42/58.

**HDPE 2:** The bimodal HDPE 2 was prepared as HDPE 1, but the hydrogen to ethylene ratio and the ratio of 1-butene to ethylene were adjusted to produce final bimodal polymer which, after collecting the polymer, blending with additives and extruding into pellets in a counterrotating twin-screw extruder JSW CIM90P, resulted to a HDPE polymer having an MFR₂ of 0.5 g/10 min and density of 955 kg/m³. The split between the polymer produced in the loop reactor and the polymer produced in the gas phase reactor was 50/50.

**HDPE 3:** The unimodal HDPE 3 was prepared in a loop reactor having a volume of 500 dm3 were continuously introduced isobutane, ethylene and hydrogen. In addition, a polymerisation catalyst prepared otherwise according to Example 3 of WO 95/35323 was introduced into the reactor together with triethyl aluminum so that the molar ratio of aluminum in the activator to titanium in the solid component was 15. The loop reactor was operated at 96 °C temperature and 60 bar pressure. Ethylene content in the fluid phase in the slurry reactor and the ratio of hydrogen to ethylene were adjusted to produce final bimodal polymer which, after collecting the polymer, blending with additives and extruding into pellets in a counterrotating twin-screw extruder JSW CIM90P, resulted to a HDPE polymer having an MFR₂ of 0.6 g/10min, and a density of 958 kg/m3.

### Film Sample Preparation

Film Samples used for general definitions of film properties defined above and in claims, as well as of the film samples of the examples of the invention and of the reference examples described below in tables were produced by coextrusion on a three-layer Windmöller & Hölscher coextrusion line with die diameter 200 mm, at a blow up ratio (BUR) 3.5:1, frost line height 600 mm, Die gap 1.2 mm, Extruder temp setting: 210°C and line speed of 5.6 m/min to form a 200 µm three-layered film with a layer thickness distribution of 15:70:15. The layers are designated core layer (1) and sandwiching layers (2) and (2'), with the layer (2') designation the inner layer referring to the orientation of the film structure with respect to the desired use. As to the film samples of examples of the invention in below tables, some of the sample preparation conditions were varied as defined in table 3.

Film samples used and the obtained data are presented in Tables 1 to 4 together with data for comparative AI/PE laminates. In comparison to the AI/PE laminates the three layer structures of the present invention provide better values for mechanical properties with similar or at least fully satisfactory results for WVTR.

**Table 1: Film samples, composition and layer structure**

| **Film sample identification** | 1 | 2 | 3 | 4 |
|---|---|---|---|---|
| **Composition of sandwiching layer (2') (inner)** | 70% znLLDPE 1 + 30% mLLDPE 1 | 70% znLLDPE 2+ 30% mLLDPE 1 | 70% znLLDPE 2 + 30% mLLDPE 1 | 70% znLLDPE 2 + 30°/o mLLDPE 2 |
| **Composition of core layer (1)** | **100%** HDPE 1 | **100%** HDPE 1 | **100%** HDPE 2 | **100%** HDPE 3 |
| **Composition of sandwiching layer (2) (outer)** | 70% znLLDPE 1 + 30% mLLDPE 1 | 70% znLLDPE 2 + 30% mLLDPE 1 | 70% znLLDPE 2 + 30% mLLDPE 1 | 70% znLLDPE 2 + 30% mLLDPE 1 |

**Table 2: Comparative AI/PE laminates**

| | ***Comparative example 1: Al foil (thickness about 8 µm) laminated on PE (commercial grade)*** | ***Comparative examples 2: Al foil (thickness about 8 µm) crosslaminated on PE (commercial grade)*** |
|---|---|---|
| ***WVTR (g*/*m2, 24h, 38°C, 90% RH)*** | ***0,3 (0,5*) after use**** | ***not measured*** |
| ***Impact resistance on Film (g)*** | ***290*** | ***>1000*** |
| ***Impact resistance on Fold (g)*** | ***<100*** | ***>1000*** |
| ***Tear resistance in MD (N)*** | ***2,4*** | ***4,2*** |
| ***Film Thickness*** | ***200 µm*** | ***200 µm*** |

**Table 3: Process parameters for Film preparation**

| **Processing parameters** | Ex.1 | Ex.2 | Ex.3 | Ex.4 |
|---|---|---|---|---|
| **Output/ Kg/h:** | 120 | 120 | 120 | 118 |
| **Line speed/ m/min** | 5.6 | 5.6 | 5.6 | 5.6 |
| **Melt temp./ °C:** | 218-236 | 220 - 236 | 220 - 230 | 202 - 215 |
| **Melt pressure/ bar:** | 523 | 546 | 381 | 474 |
| **Average film thickness, µm:** | 200 | 200 | 200 | 200 |

**Table 4: Process parameters for Film preparation**

| **Laboratory test methods** | Ex. 1 | Ex. 2 | Ex. 3 | Ex. 4 |
|---|---|---|---|---|
| **Film Thickness (µm)** | **199** | **202** | **197** | **209** |
| **Tensile Modulus in MD, MPa** | **370** | **445** | **495** | **420** |
| **Impact Resistance on film, a** | **1040** | **>1400** | **820** | **600** |
| **Impact resistance on Fold, g,** | **540** | **510** | **560** | **460** |
| **Tear resistance in MID, N** | 6.9 | 7.8 | 5.2 | 6.4 |
| **Puncture resistance, energy to break, J** | **27.4** | **24.8** | **21.5** | **22.2** |
| **WVTR g H₂O/m²/24 hr, 38°C, 90% relative humidity** | **0.79** | **0.71** | **0.63** | **0.69** |

## Claims

1. Three-layer structure, comprising a core layer (1) and two layers sandwiching the core layer (2, 2'), wherein the core layer comprises HDPE polymer and the two sandwiching layers (2, 2') comprise LLDPE polymer, wherein the core layer (1) comprises more than 50-wt% of HDPE polymer, based on the total weight of the core layer (1), and wherein both of the sandwiching layers (2, 2') consist of LLDPE polymer, wherein conventional additives such as stabilizers, processing aids, colorants, anti-block agents, and/or slip agents, may be added in any of the three layers, wherein the overall amount of additives in a layer is 2 wt% or less, based on the weight of the layer.

2. Three-layer structure in accordance with claim 1, wherein the core layer (1) comprises more than 85-wt% of HDPE polymer, preferably wherein the core layer (1) consists of HDPE polymer.

3. Three-layer structure in accordance with claim 1 or 2, wherein the LLDPE polymer for the two sandwiching layers (2, 2') is selected from LLDPE polymer prepared using a Ziegler-Natta catalyst, a mLLDPE polymer produced with a metallocene catalyst, or mixtures thereof.

4. Three-layer structure in accordance with any of the preceding claims, wherein the HDPE polymer for the core layer (1) displays a MFR₂ value of from 0.05 to 10 g/10 min, preferably 0.1 to 2 g/10 min and more preferably from 0.3 to 0.8 g/10 min.

5. Three-layer structure in accordance with any of the preceding claims, wherein the HDPE polymer for the core layer (1) displays a MFR₂₁ value in the range of from 2 to 12 g/10 min, preferably 4 to 10 g/10 min, more preferably 6 to 8 g/10 min.

6. Three-layer structure in accordance with any of the preceding claims, wherein the HDPE polymer for the core layer (1) has a density of from 0.950 to 0.965 g/cm³, preferably of from 0.955 to 0.965 g/cm³ and more preferably of from more than 0.955 to 0.960 g/cm³.

7. Three-layer structure in accordance with any of the preceding claims, wherein the three-layer structure has a thickness of from 180 to 250 µm, preferably of from 200 to 240 µm.

8. Three-layer structure in accordance with any of the preceding claims, wherein at least one of the sandwiching layers (2, 2') comprises an mLLDPE polymer.

9. Three-layer structure in accordance with any of the preceding claims, wherein the core layer (1) amounts to more than 70-wt% of the total weight of the three-layer structure.

10. Three-layer structure in accordance with any of the preceding claims, wherein the core layer (1) consists of HDPE polymer and wherein the sandwiching layers (2, 2') consist of LLDPE polymer.

11. Three-layer structure in accordance with any of the preceding claims, providing a moisture barrier property corresponding to a water permeation (WVTR) of less than 1.0g H₂O/m²/24h preferably 0.8g H₂O/m²/24 hr, measured in an atmosphere having a temperature of 38°C and a relative humidity of 90% (standard pressure), and on a three-layered structure with a thickness of 200µm and a layer thickness distribution of 15:70:15.

12. Three-layer structure in accordance with any of the preceding claims, wherein the HDPE polymer for core layer (1) is a bimodal HDPE.

13. Three-layer structure in accordance with any of the preceding claims, wherein the LLDPE polymer for the sandwiching layers (2, 2') is a bimodal LLDPE polymer.

14. Three-layer structure in accordance with any of the preceding claims, prepared by coextrusion processes.

15. Three-layer structure in accordance with any of the preceding claims, displaying a fold impact of greater than 450 g.

16. Three-layer structure in accordance with any of the preceding claims, displaying a film impact of greater than 550 g.

17. Three-layer structure in accordance with any of the preceding claims, wherein one of the sandwiching layers (2, 2') consists of mLLDPE.

18. Packaging material, prepared from a three-layer structure in accordance with any of claims 1 to 17.

19. Packaging material in accordance with claim 18 in the form of a sack or bag.

20. Use of a three-layer structure in accordance with any of claims 1 to 17 for producing packaging materials.

21. Use according to claim 20, wherein the packaging material is selected from sacks and bags.

22. Use of a three-layer structure according to any one of claims 1 to 17 for packaging moisture sensitive goods.

23. Use according to claim 22, wherein the moisture sensitive good is a moisture sensitive resin.

## Patentansprüche

1. Dreischichtenstruktur, umfassend eine Kernschicht (1) und zwei die Kernschicht sandwichartig umgebende Schichten (2, 2'), wobei die Kernschicht HDPE-Polymer umfasst und die zwei sandwichartig umgebenden Schichten (2, 2') LLDPE-Polymer umfassen, wobei die Kernschicht (1) mehr als 50 Gew.-% HDPE-Polymer, bezogen auf das Gesamtgewicht der Kernschicht (1), umfasst, und wobei beide sandwichartig umgebende Schichten (2, 2') aus LLDPE-Polymer bestehen, wobei herkömmliche Additive wie Stabilisatoren, Verarbeitungshilfsmittel, Färbemittel, Antiblockiermittel und/oder Gleitmittel in beliebigen der drei Schichten zugegeben sein können, wobei die Gesamtmenge von Additiven in einer Schicht 2 Gew.-% oder weniger, bezogen auf das Gewicht der Schicht, beträgt.

2. Dreischichtenstruktur gemäß Anspruch 1, wobei die Kernschicht (1) mehr als 85 Gew.-% HDPE-Polymer umfasst, wobei die Kernschicht (1) vorzugsweise aus HDPE-Polymer besteht.

3. Dreischichtenstruktur gemäß Anspruch 1 oder 2, wobei das LLDPE-Polymer für die zwei sandwichartig umgebenden Schichten (2, 2') aus LLDPE-Polymer, das unter Verwendung eines Ziegler-Natta-Katalysators hergestellt ist, einem mLLDPE-Polymer, das mit einem Metallocenkalalysator hergestellt ist, oder Mischungen davon ausgewählt ist.

4. Dreischichtenstruktur gemäß einem der vorangehenden Ansprüche, wobei das HDPE-Polymer für die Kernschicht (1) einen MFR₂-Wert von 0,05 bis 10 g/10 min, vorzugsweise 0,1 bis 2 g/10 min und stärker bevorzugt von 0,3 bis 0,8 g/10 min aufweist.

5. Dreischichtenstruktur gemäß einem der vorangehenden Ansprüche, wobei das HDPE-Polymer für die Kernschicht (1) einen MFR₂₁-Wert im Bereich von 2 bis 12 g/10 min, vorzugsweise 4 bis 10 g/10 min, stärker bevorzugt 6 bis 8 g/10 min aufweist.

6. Dreischichtenstruktur gemäß einem der vorangehenden Ansprüche, wobei das HDPE-Polymer für die Kernschicht (1) eine Dichte von 0,950 bis 0,965 g/cm³, vorzugsweise von 0,955 bis 0,965 g/cm³ und stärker bevorzugt von mehr als 0,955 bis 0,960 g/cm³ aufweist.

7. Dreischichtenstruktur gemäß einem der vorangehenden Ansprüche, wobei die Dreischichtenstruktur eine Dicke von 180 bis 250 µm, vorzugsweise von 200 bis 240 µm aufweist.

8. Dreischichtenstruktur gemäß einem der vorangehenden Ansprüche, wobei wenigstens eine von den sandwichartig umgebenden Schichten (2, 2') ein mLLDPE-Polymer umfasst.

9. Dreischichtenstruktur gemäß einem der vorangehenden Ansprüche, wobei die Kernschicht (1) mehr als 70 Gew.-% des Gesamtgewichts der Dreischichtenstruktur ausmacht.

10. Dreischichtenstruktur gemäß einem der vorangehenden Ansprüche, wobei die Kernschicht (1) aus HDPE-Polymer besteht und wobei die sandwichartig umgebenden Schichten (2, 2') aus LLDPE-Polymer bestehen.

11. Dreischichtenstruktur gemäß einem der vorangehenden Ansprüche, die eine Feuchtigkeitssperreigenschaft bereitstellt, die einer Wasserdurchlässigkeit (WVTR) von weniger als 1,0 g H₂O/m²/24 h, vorzugsweise 0,8 g H₂O/m²/24 h entspricht, gemessen in einer Atmosphäre mit einer Temperatur von 38 °C und einer relativen Feuchtigkeit von 90 % (Standarddruck), und an einer Dreischichtenstruktur mit einer Dicke von 200 µm und einer Schichtdickenverteilung von 15:70:15.

12. Dreischichtenstruktur gemäß einem der vorangehenden Ansprüche, wobei das HDPE-Polymer für die Kernschicht (1) ein bimodales HDPE ist.

13. Dreischichtenstruktur gemäß einem der vorangehenden Ansprüche, wobei das LLDPE-Polymer für die sandwichartig umgebenden Schichten (2, 2') ein bimodales LLDPE-Polymer ist.

14. Dreischichtenstruktur gemäß einem der vorangehenden Ansprüche, hergestellt durch Koextrusionsverfahren.

15. Dreischichtenstruktur gemäß einem der vorangehenden Ansprüche, die eine Falz-Schlagfestigkeit von mehr als 450 g aufweist.

16. Dreischichtenstruktur gemäß einem der vorangehenden Ansprüche, die eine Film-Schlagfestigkeit von mehr als 550 g aufweist.

17. Dreischichtenstruktur gemäß einem der vorangehenden Ansprüche, wobei eine der sandwichartig umgebenden Schichten (2, 2') aus mLLDPE besteht.

18. Verpackungsmaterial, hergestellt aus einer Dreischichtenstruktur gemäß einem der Ansprüche 1 bis 17.

19. Verpackungsmaterial gemäß Anspruch 18 in Form eines Sacks oder eines Beutels.

20. Verwendung einer Dreischichtenstruktur gemäß einem der Ansprüche 1 bis 17 zum Herstellen von Verpackungsmaterialien.

21. Verwendung gemäß Anspruch 20, wobei das Verpackungsmaterial aus Säcken und Beuteln ausgewählt ist.

22. Verwendung einer Dreischichtenstruktur gemäß einem der Ansprüche 1 bis 17 für die Verpackung von feuchtigkeitsempfindlichen Waren.

23. Verwendung gemäß Anspruch 22, wobei die feuchtigkeitsempfindliche Ware ein feuchtigkeitsempfindliches Harz ist.

## Revendications

1. Structure à trois couches comprenant une couche centrale (1) et deux couches (2, 2') prenant en sandwich la couche centrale, dans laquelle la couche centrale comprend un polymère HDPE et les deux couches extérieures de sandwich (2, 2') comprennent un polymère LLDPE, dans laquelle la couche centrale (1) comprend plus de 50% en poids de polymère HDPE, par rapport au poids total de la couche centrale (1), et dans laquelle les deux couches extérieures de sandwich (2, 2') sont constituées de polymère LLDPE, dans laquelle des additifs conventionnels tels que des stabilisants, des auxiliaires de traitement, des colorants, des agents anti-blocage et/ou des agents glissants peuvent être ajoutés dans n'importe laquelle des trois couches,
dans laquelle la quantité totale d'additifs dans une couche est égale ou inférieure à 2% en poids, par rapport au poids de la couche.

2. Structure à trois couches selon la revendication 1, dans laquelle la couche centrale (1) comprend plus de 85% en poids de polymère HDPE, de préférence dans laquelle la couche centrale (1) est constituée de polymère HDPE.

3. Structure à trois couches selon la revendication 1 ou 2, dans laquelle le polymère LLDPE pour les deux couches extérieures de sandwich (2, 2') est choisi entre un polymère LLDPE préparé en utilisant un catalyseur Ziegler-Natta, un polymère mLLDPE produit avec un catalyseur métallocène ou un mélange des deux.

4. Structure à trois couches selon l'une quelconque des revendications précédentes, dans laquelle le polymère HDPE pour la couche centrale (1) a une valeur MFR₂ comprise entre 0,05 g/10 min et 10 g/10 min, de préférence entre 0,1 g/10 min et 2 g/10 min et plus préférablement entre 0,3 g/10 min et 0,8 g/10 min.

5. Structure à trois couches selon l'une quelconque des revendications précédentes, dans laquelle le polymère HDPE pour la couche centrale (1) a une valeur MFR₂ comprise entre 2 g/10 min et 12 g/10 min, de préférence entre 4 g/10 min et 10 g/10 min, plus préférablement entre 6 g/10 min et 8 g/10 min.

6. Structure à trois couches selon l'une quelconque des revendications précédentes, dans laquelle le polymère HDPE pour la couche centrale (1) a une masse volumique comprise entre 0,950 g/cm³ et 0,965 g/cm³, de préférence entre 0,955 g/cm³ et 0,965 g/cm³ et plus préférablement entre 0,955 g/cm³ et 0,960 g/cm³.

7. Structure à trois couches selon l'une quelconque des revendications précédentes, dans laquelle la structure à trois couches a une épaisseur comprise entre 180 µm et 250 µm, de préférence entre 200 µm et 240 µm.

8. Structure à trois couches selon l'une quelconque des revendications précédentes, dans laquelle au moins une des couches extérieures de sandwich (2, 2') comprend un polymère mLLDPE.

9. Structure à trois couches selon l'une quelconque des revendications précédentes, dans laquelle la couche centrale (1) représente plus de 70% en poids du poids total de la structure à trois couches.

10. Structure à trois couches selon l'une quelconque des revendications précédentes, dans laquelle la couche centrale (1) est constituée de polymère HDPE et dans laquelle les couches extérieures de sandwich (2,2') sont constituées de polymère LLDPE.

11. Structure à trois couches selon l'une quelconque des revendications précédentes, fournissant une propriété de barrière à l'humidité correspondant à une perméation de l'eau (WVTR) inférieure à 1,0 g H₂O/m²/24h, de préférence 0,8 g H₂O/m²/24h, mesurée dans une atmosphère à une température de 38°C et une humidité relative de 90% (pression normale) et sur une structure à trois couches ayant une épaisseur de 200 µm et une répartition d'épaisseur de couche de 15 :70 :15.

12. Structure à trois couches selon l'une quelconque des revendications précédentes, dans laquelle le polymère HDPE pour la couche centrale (1) est un HDPE bimodal.

13. Structure à trois couches selon l'une quelconque des revendications précédentes, dans laquelle le polymère LLDPE pour les couches extérieures de sandwich (2, 2') est un polymère LLDPE bimodal.

14. Structure à trois couches selon l'une quelconque des revendications précédentes, préparée par des procédés de coextrusion.

15. Structure à trois couches selon l'une quelconque des revendications précédentes, présentant une résistance au choc sur pli supérieure à 450 g.

16. Structure à trois couches selon l'une quelconque des revendications précédentes, présentant une résistance au choc du film supérieure à 550 g.

17. Structure à trois couches selon l'une quelconque des revendications précédentes, dans laquelle une des couches extérieures de sandwich (2, 2') est constituée de mLLDPE.

18. Matériau d'emballage préparé à partir d'une structure à trois couches selon l'une quelconque des revendications 1 à 17.

19. Matériau d'emballage selon la revendication 18 sous la forme d'une enveloppe ou d'un sachet.

20. Utilisation d'une structure à trois couches selon l'une quelconque des revendications 1 à 17 pour produire des matériaux d'emballage.

21. Utilisation selon la revendication 20, dans laquelle le matériau d'emballage est choisi parmi des enveloppes et des sachets.

22. Utilisation d'une structure à trois couches selon l'une quelconque des revendications 1 à 17 pour emballer des marchandises sensibles à l'humidité.

23. Utilisation selon la revendication 22, dans laquelle la marchandise sensible à l'humidité est une résine sensible à l'humidité.
